# EUROPEAN PATENT SPECIFICATION

(11) **EP 3 421 518 B1**
(45) Date of publication and mention of the grant of the patent: **17.03.2021**
(21) Application number: 17755981.2
(22) Date of filing: 11.01.2017
(51) Int. Cl.: C08G 63/16, C08G 63/78, C08L 101/16

(54) **POLYOXALATE COPOLYMER AND PRODUCTION PROCESS THEREFOR**
POLYOXALATCOPOLYMER UND HERSTELLUNGSVERFAHREN DAFÜR
COPOLYMÈRE DE POLYOXALATE ET SON PROCÉDÉ DE PRODUCTION

(30) Priority: 26.02.2016 JP 2016035585
(43) Date of publication of application: 02.01.2019
(73) Proprietor: Toyo Seikan Group Holdings, Ltd., Shinagawa-ku Tokyo 141-8627 (JP)
(72) Inventor: KATAYAMA, Tsutaki, Yokohama-shi Kanagawa 240-0062 (JP); YOSHIKAWA, Seishi, Yokohama-shi Kanagawa 240-0062 (JP)
(74) Representative: J A Kemp LLP
(86) International application number: PCT/JP2017/000576
(87) International publication number: WO 2017/145539

(56) References cited:
- WO-A1-2015/098926
- WO-A1-2015/098926
- JP-A- H0 959 359
- JP-A- H09 316 181

## Description

This invention relates to a polyoxalate copolymer and a method of producing the same. More specifically, the invention relates to a polyoxalate copolymer that can be produced even without using solvent and to a method of producing the same.

### Background Art:

The polyoxalate is a polyester that comprises an acid-constituting unit derived from an oxalic acid and a diol-constituting unit derived from a diol component (specifically, ethylene glycol), has very excellent hydrolyzing capability as compared to the polylactic acid, and has been studied for its use in a variety of fields. In the field of agriculture, for example, proposals have been made to use the polyoxalate in the form of film, sheet, tray, pot and the like. In the field of environment, proposals have been made to use the polyoxalate as a water cleaning material or a soil cleaning material in the form of powder or pellets . In the field of extracting the resources such as shale gases, proposals have been made to use the polyoxalate in the form of a powder or a fiber which is to be added to the fracturing fluid or the like. This is because, the polyoxalate can be disposed of without requiring heat treatment such as firing; i.e., the polyoxalate easily undergoes the hydrolysis and does not cause any environmental pollution such as soil pollution.

However, the polyoxalate is subject to be easily decomposed by heat when it is being transformed into a form suited for the use. For instance, a difficulty will be involved when it is to be melted and kneaded together with other components or when it is to be pelletized into spherical granules by using an underwater cutter after having been melt-extruded, which is a defect. Moreover, the polyoxalate tends to develop blocking when it is pulverized, and is difficult to handle, which is also a defect.

A patent document 1, for example, discloses a polyester polymer having a number average molecular weight of not less than 10,000 calculated as polystyrene as measured by the GPC. As the polyester polymer, the patent document 1 shows a polyoxalate obtained by the ester polymerization, i.e., by the reaction of an oxalic anhydride or an oxalic hydrate with an ethylene glycol. The patent document 1, further, shows a polyoxalate obtained by using a 1,4-butanediol instead of the ethylene glycol or by subjecting the 1,4-butanediol to the esterification polymerization reaction.

The polyoxalate disclosed above has a high heat decomposition temperature and has excellent heat stability without, however, improving the above-mentioned defects. Besides, the polyoxalate is highly crystalline and has a decreased hydrolyzing capability. For instance, a polyoxalate obtained by using the ethylene glycol as the diol component has a melting point and a heat decomposition temperature which are close to each other and can, therefore, be melt-kneaded involving great difficulty. Moreover, a polyoxalate obtained by using the 1,4-butanediol as the diol component has a considerably low melting point and, therefore, is very soft, cannot be easily pulverized, cannot be easily granulated and, as a result, is difficult to handle still leaving a defect.

A patent document 2 is an application filed by the present applicant and is proposing a polyoxalate obtained by the esterification polymerization reaction without using solvent. This polyoxalate has been effectively improved for its anti-blocking property at the time of pulverization but has a melting point and a thermal decomposition temperature which are close to each other, and, therefore, cannot be easily melt-kneaded, which still is a defect.

### Prior Art Documents:

### Patent Documents:

Patent document 1: JP-A-09-59359
Patent document 2: WO2015/098926

### Outline of the Invention:

### Problems that the Invention is to Solve:

It is, therefore, an object of the present invention to provide a polyoxalate copolymer that can be excellently handled and a method of producing the same.

### Means for Solving the Problems:

The present inventors have conducted a lot of experiments concerning the handling of the polyoxalate. As a result, the inventors have discovered the fact that in producing a polyoxalate by using a dimethyl oxalate as a starting material and by reacting it with an ethylene glycol, it becomes possible to obtain a polyoxalate copolymer that can be excellently handled if the esterification reaction is continued by adding a diol other than the ethylene glycol at a predetermined timing, and have thus completed the invention.

According to the present invention, there is provided a polyoxalate copolymer including an acid-constituting unit derived from an oxalic acid and a diol-constituting unit derived from a diol component, the diol-constituting unit being derived from a combination of an ethylene glycol and other diol, wherein the other diol is a 1,3-propylene glycol or a 1,4-butanediol, and wherein the polyoxalate copolymer has:
- a temperature differential between a 5% weight loss temperature as measured by the TG-DTA and a melting point thereof in a range of 55 to 80°**C**, wherein the 5% weight loss temperature and melting point are as measured on the TG/DTA 7220 apparatus manufactured by Hitachi High-Tech Science Co. when preparing amounts of samples of 5 to 10 mg, when measuring conditions are nitrogen atmosphere, elevating the temperature at a rate of 10°**C**/min. and measuring over a range of 40°**C** to 300°**C**, and wherein the melting point is found based on the peak top and the 5% weight loss temperature is the temperature of when the weight of the sample has decreased by 5% with respect to the initial weight; and
- a quantity of heat of fusion (**Δ**H) is in a range of less than 60 J/g, wherein the heat of fusion (**Δ**H) is the sum of the areas of the following peaks when measured by differential scanning calorimetry on the DSC6220 apparatus manufactured by Seiko Instruments Inc: (i) when describing a curve of a temperature rise of the first time by elevating the temperature from -100°**C** at a rate of 20°**C** /min., observing an endothermic peak therefrom; and (ii) next, further elevating the temperature therefrom by 20°**C**, maintaining the temperature for 10 minutes, thereafter lowering the temperature down to -100°**C** at a rate of 20°**C** /min, then elevating the temperature again at the same rate as above to describe a curve of temperature rise of the second time, and observing an endothermic peak therefrom.

In the polyoxalate copolymer of the present invention, it is desired that:
(1) 98 to 90 mol% of the diol-constituting unit is derived from the ethylene glycol;
(2) Has a shape of spherical particles satisfying 0.7 < short diameter/long diameter ≦ 1 and having an average value of the long diameters in a range of 0.5 to 10 mm.

According to the present invention, further, there is provided a method of producing a polyoxalate copolymer by using, as a diol component, an ethylene glycol and other diol in combination, wherein the other diol is a 1,3-propylene glycol or a 1,4-butanediol, and subjecting the diol component and a dimethyl oxalate to an esterification polymerization reaction, wherein:
the esterification polymerization reaction is executed through a step that includes:
   a step of a normal-pressure polymerization inclusive of the esterification polymerization reaction of a oxalic acid formed from the dimethyl oxalate and the ethylene glycol, and
   a step of a reduced-pressure polymerization that is accompanied by a removal of diol after the step of the normal-pressure polymerization;
   and wherein;
the other diol is added to a polymerization system at a predetermined temperature of 120 to 170°**C** in the step of the normal-pressure polymerization.

### Effects of the Invention:

The polyoxalate copolymer of the present invention comprises, as a main skeleton, an ester unit of an oxalic acid and an ethylene glycol, and has a feature in the structure in that it includes, as a copolymerized unit, a diol-constituting unit derived from a diol other than the ethylene glycol. Due to the above feature in the structure, the polyoxalate copolymer has such a property that a temperature differential between a 5% weight loss temperature as measured by the TG-DTA (thermogravimetric-differential thermal analysis) and a melting point thereof is in a range of 55 to 80°**C** and, preferably, 55 to 70°**C**.

That is, the above temperature differential indicates that a difference is large between the heat decomposition temperature and the melting point. As a result, the polyoxalate copolymer of the present invention can be melt-kneaded and thermally formed by being heated at a temperature higher than the melting point thereof yet effectively avoiding the heat decomposition and can, therefore, be handled very excellently.

Further, the polyoxalate copolymer of the preset invention is produced as described below. Namely, in synthesizing the polyoxalate by subjecting the oxalic acid diester and the ethylene glycol to the esterification polymerization reaction in two steps, i.e., the step of a normal-pressure polymerization and the step of a reduced-pressure polymerization, the other diol to be copolymerized is added at a temperature of 120 to 170°**C** during the normal-pressure polymerization, and thus the polyoxalate copolymer is produced. By employing the above method, the molecular weight can be stably secured and, besides, the pipelines are effectively prevented from being clogged with the oligomers that build up therein. Accordingly, the polyoxalate copolymer can be obtained in high yields. Moreover, the above method can be carried out even without using an organic solvent, i.e., even in the absence of the solvent, and very excels also from the standpoint of cost and environment. If the esterification polymerization reaction is carried out by using the organic solvent, further, it is made possible to effectively prevent the methyl alcohol dissociated from the oxalic acid diester and the unreacted diols (ethylene glycol and other diols) from being mixed into the polymer that is obtained. Therefore, there is obtained the polyoxalate copolymer having excellent pulverizability.

### Brief Description of the Drawings:

[Fig. 1] It is a view schematically illustrating the structure of a reaction apparatus used for a production method of the present invention.
[Fig. 2] It is a diagram showing a TG-DTA curve of a polyoxalate copolymer obtained in Comparative Example 1.
[Fig. 3] It is a diagram showing TG-DTA curves of a polyoxalate copolymer obtained in Example 1 and of a polyoxalate polymer (polyethylene oxalate) obtained in Example 2 together with the TG-DTA curve of the polyoxalate copolymer obtained in Comparative Example 1.
[Fig. 4] It is a view showing pellets obtained in Reference Examples.

### Modes for Carrying Out the Invention:

### <Polyoxalate copolymers>

By taking into consideration the easiness of handling and formability into films and the like, the polyoxalate copolymer of the present invention is, usually, so adjusted as to possess a weight average molecular weight in a range of 10, 000 to 200, 000 calculated as polystyrene relying on the GPC (gel permeation chromatography).

In the polyoxalate polymer, the recurring unit that forms the polymer chain includes an acid-constituting unit derived from an oxalic acid and a diol-constituting unit derived from a diol component. In the polyoxalate copolymer of the present invention, however, the diol-constituting unit is formed by a combination of an ethylene glycol and other diol.

That is, the polyoxalate copolymer of the present invention contains the ester unit formed by the oxalic acid (acid-constituting unit) and the ethylene glycol (diol-constituting unit) as a main ester unit and, further, contains the ester unit formed by the oxalic acid (acid-constituting unit) and the diol other than the ethylene glycol as a copolymerized ester unit.

If concretely described, the main ester unit is represented by the following formula (1) and the copolymerized ester unit is represented by the following formula (2). Main ester unit;

-CO-CO-O-CH₂-CH₂-O- (1)

Copolymerized ester unit;

-CO-CO-O-A-O- (2)

wherein A is a residue of the other diol.

That is, the polyoxalate comprising the main ester unit of the above formula (1) only is a homopolymer that is called polyethylene oxalate. According to the present invention, the main ester unit further incorporates the copolymerized ester unit represented by the formula (2) to form a copolymer.

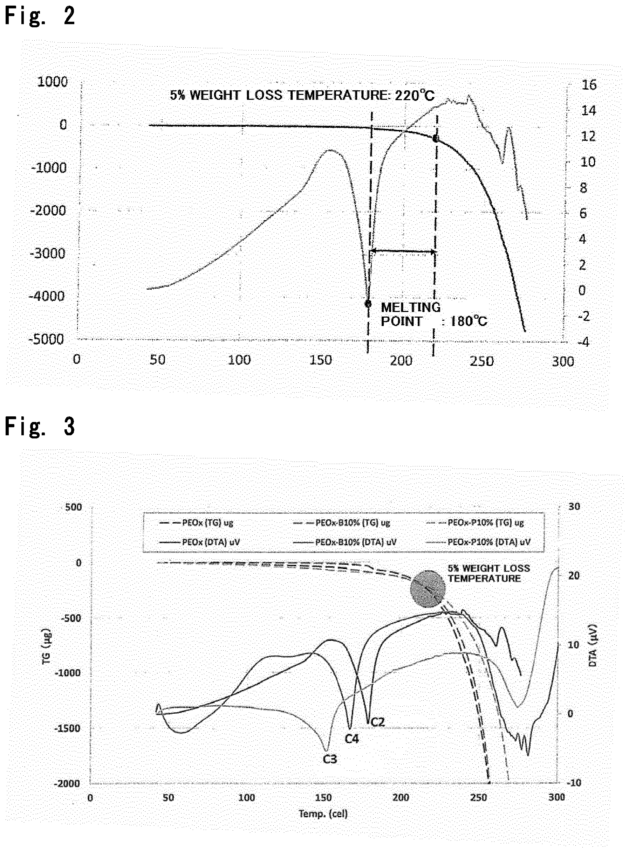

The copolymer contains, as the recurring units, the above-mentioned main ester unit and the copolymerized ester unit. That is, introduction of the copolymerized ester unit helps greatly decrease the melting point though the 5% weight loss temperature (Td5%) that serves as a scale of heat decomposition temperature is about 220 to about 230°**C** which is not much different from that of, for example, the polyethylene oxalate homopolymer. Physical changes due to the introduction of the copolymerized ester unit have been clearly shown in Figs. 2 and 3 that depict experimental results of Comparative Example 1 and Examples 1 and 2 that will appear later. Due to the physical changes, the polyoxalate copolymer of the present invention can be easily melt-formed and melt-kneaded while effectively suppressing the heat decomposition at the time of melt-forming.

In the polyoxalate copolymer of the present invention, the diol other than the ethylene glycol used for introducing the copolymerized ester unit is a 1,3-propylene glycol or a 1,4-butanediol, and most preferably, is 1,4-butanediol from the standpoint of greatly lowering the melting point.

In the invention, further, it is desired that 98 to 90 mol% and, specifically, 94 to 90 mol% of the unit derived from the ethylene glycol in the ester-constituting unit is the one that is derived from the ethylene glycol, and the rest is the unit derived from the other diol. If the amount of the copolymerized ester unit derived from the other diol is too large, then the melting point becomes low unnecessarily; i.e., the melting point becomes too low and the glass transition temperature becomes low. Besides, the crystallinity becomes low, too, permitting the resin to develop blocking at room temperature. In the invention, therefore, it is desired that the amount of the copolymerized unit that is introduced is limited to lie in the above-mentioned range, and the melting point as measured, for example, by the peak top on a DTA curve is adjusted to be not lower than 150°**C** and, specifically, not lower than 160°**C**.

Moreover, as described above, the polyoxalate copolymer of the present invention contains the copolymerized unit derived from the diol other than the polyethylene glycol. In this connection, the polyoxalate copolymer is highly amorphous and has a quantity of heat of fusion (**Δ**H) which is less than 60 J/g and, preferably, in a range of not more than 50 J/g.

The quantity of heat of fusion (**Δ**H) is calculated from a curve of temperature rise of the second time as measured by the DSC. Concretely, the polymer is heated from -100°**C** at a rate of 20°**C**/min. to describe a curve of temperature rise of the first time and from which an endothermic peak is observed.

Thereafter, the temperature is further elevated by 20°**C** and is maintained at this temperature for 10 minutes. Thereafter, the temperature is lowered at a rate of 20°**C**/min. down to -100°**C**. Again, the temperature is elevated at the same rate as above to describe a curve of temperature rise of the second time and from which an endothermic peak is observed. The quantity of heat of fusion (**Δ**H) is calculated from the areas of the above peaks. The larger the quantity of heat of fusion (**Δ**H), the more rich in crystallinity the polymer is. The smaller the quantity of heat of fusion (**Δ**H), the less crystalline it is. That is, the polyoxalate copolymer of the present invention contains the copolymerized unit derived from the other diol components and is, therefore, highly amorphous.

If added a little more, the polyoxalate copolymer of the present invention has a glass transition point (Tg), usually, in a range of about 20 to about 50°**C**. Preferably, the glass transition point (Tg) should be 25°**C** to 40°**C** if consideration is given to blocking of the resins under the room temperature condition. The glass transition temperature lying within the above range is also desired for improving the hydrolysable capability at temperatures of not lower than the room temperature. Specifically preferably, the polyoxalate copolymer is synthesized without using the organic solvent. The polyoxalate copolymer synthesized by such a means contains the volatile components in amounts of not more than 2.0% by weight and, specifically, not more than 1.8% by weight at 200°**C** as calculated based on the TGA measurements. That is, the content of the volatile components at 200°**C** that is small means that the content of the methyl alcohol or the unreacted diol (e.g., ethylene glycol or other diols) by-produced by the reaction has been suppressed to be very small. The polyoxalate copolymer that contains the diol components in small or suppressed amounts develops the blocking less during the pulverization and exhibits a very high degree of pulverizability.

The above-mentioned polyoxalate copolymer of the present invention can be handled excellently, and is capable of effectively avoiding the heat decomposition during the melt-kneading or the heat-forming. Depending on the use, therefore, the polyoxalate copolymer can be easily applied to be used in various forms such as film or sheet, tray, container, spherical particles or various formed articles. Depending on the use, further, it can be used being blended with various kinds of additives such as known plasticizer, carboxyl group-sealing agent, heat stabilizer, photo stabilizer, antioxidant, ultraviolet-ray absorber, flame retarder, coloring agent, pigment, filler, filling material, parting agent, antistatic agent, perfume, lubricant, foaming agent, antibacterial▪ antimolding agent, nucleating agent, lamellar silicate, terminal group-sealing agent, crosslinking agent and enzyme.

As required, further, the polyoxalate copolymer can be used being melt-kneaded with aliphatic polyester such as polylactic acid, polyglycolic acid or polybutylene succinate, or with other biodegradable resins such as polyvinyl alcohol (PVA) or cellulose.

Though there is no particular limitation on the size of the particles, it is desired that the polyoxalate copolymer assumes the form of spherical particles of, usually, 0.7 < short diameter/long diameter ≦ 1, and has an average long diameter in a range of 0.5 to 10 mm and, specifically, 0.5 to 10 mm.

### <Production of the polyoxalate copolymers>

The above-mentioned polyoxalate copolymer of the present invention can be produced by the esterification polymerization reaction of a dimethyl oxalate, an ethylene glycol and other diol.

In the esterification polymerization reaction, there can be used, as required, catalysts and organic solvents.

The catalysts that can be used are the known ones. Typical examples are titanium alkoxides such as titanium tetrabutoxide and the like; antimony compounds such as antimony trioxide and the like; and tin compounds such as dibutyltin oxide and butyltin dilaurate. In addition to them, there can be also used compounds of P, Ge, Zn, Fe, Mn, Co, Zr, V and various kinds of rate earth metals in so-called catalytic amounts.

As the organic solvents that can be suitably used, there can be exemplified aromatic hydrocarbon type organic solvents such as benzene, toluene and xylene; aliphatic hydrocarbon type organic solvents such as pentane, hexane, cyclohexane, heptane, decalin and tetralin; ether type organic solvents such as ethyl ether and tetrahydrofuran; and chlorinated hydrocarbon type organic solvents such as chloroform, chlorobenzene and carbon tetrachloride.

The polyoxalate copolymer of the present invention can be obtained by the above-mentioned esterification polymerization reaction without using any organic solvent, i.e., in the absence of the organic solvent. The esterification polymerization reaction in the absence of the solvent is advantageous from the standpoint of production cost and the like.

Specifically, to produce the polyoxalate copolymer that contains little volatile compounds and that can be pulverized vary favorably, it is recommended to carry out the esterification polymerization reaction in the absence of the solvent.

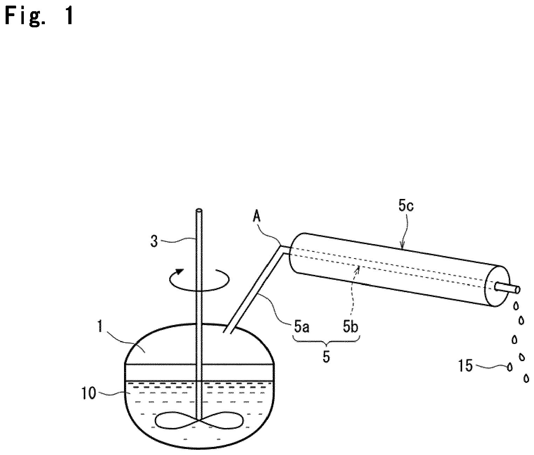

In the esterification polymerization reaction, first, methanol is removed from the dimethyl oxalate and the ethylene glycol, and the polymerization proceeds due to the esterification. In the invention, the esterification polymerization reaction is carried out in two steps of a normal-pressure polymerization and a reduced-pressure polymerization by using, for example, a batch type polymerization reactor shown in Fig. 1.

In Fig. 1, the polymerization reactor 1 has a distill-off tube 5 in addition to a stirrer 3. The distill-off tube 5 has a vertex portion A, and includes a refluxing portion 5a over a region of from the reactor 1 to the vertex portion A and a distill-off portion 5b on the downstream of the vertex portion A. In the distill-off portion 5b, there is formed a cooling tube 5c such as heat exchanger so that the liquid that is distilled off is quickly condensed and is discharged. In the refluxing portion 5a of the distill-off tube 5, there is also provided a suitable heating tube or cooling tube in order to adjust the temperature in the vertex portion A.

In the invention, a reaction solution 10 (above-mentioned methyl oxalate, ethylene glycol, other diols, catalyst that is suitably used, etc.) is fed into the reactor 1. Methanol, unreacted diol and oligomer that are by-produced in the esterification polymerization reaction are distilled off as a distillate 15 from the distill-off portion 5b through the refluxing portion 5a in the distill-off tube 5. The normal-pressure polymerization is thus carried out followed by the reduced-pressure polymerization to obtain the desired polyoxalate copolymer.

That is, a prepolymer of a low polymerization degree is obtained through the normal-pressure polymerization. Next, through the subsequent reduced-pressure polymerization, there is obtained the desired polyoxalate copolymer having a high molecular weight.

### 1. Normal-pressure polymerization;

To carry out the normal-pressure polymerization, the interior of the reactor 1 is purged with a nitrogen gas, and the reaction solution 10 fed into the reactor 1 and is heated by a predetermined heater with stirring. The heating temperature at this time is adjusted to be not lower than 110°**C** but not to exceed 200°**C**. If the heating temperature is low, the rate of polymerization is small and the productivity decreases greatly. If the heating temperature exceeds 200°C, on the other hand, the prepolymer that is formed undergoes the decomposition.

In the present invention, it is necessary that the normal-pressure polymerization is carried out by, first, reacting the dimethyl oxalate with the ethylene glycol to form a prepolymer (homoprepolymer) comprising a main ester unit of the following formula (1) that was described earlier,

-CO-CO-O-CH₂-CH₂-O- (1)

and, thereafter, adding the other diol to the reaction solution 10 to introduce, into the homoprepolymer, a copolymerized ester unit of the following formula (2),

-CO-CO-O-A-O- (2)

wherein A is a residue of the other diol.

Namely, if the ethylene glycol (EG) and the other diol are put together to the normal-pressure polymerization, it becomes difficult to obtain the copolymer that chiefly comprises the ester unit of the formula (1) since the reactivity of the EG with the dimethyl oxalate is lower than the reactivity of the other diol with the dimethyl oxalate. Here, if the reactivity with the dimethyl oxalate is compared between the butanediol (BD) and the propanediol (PG), then,
EG < BD, PG

In the normal-pressure polymerization of the EG with the dimethyl oxalate carried out, first, the amount of the EG in the reaction solution 10 that is fed is about 0.8 to about 1.2 mols per mol of the dimethyl oxalate. Feeding the EG in excess amounts to the dimethyl oxalate is desired from the standpoint of quickly executing the polymerization reaction.

The esterification polymerization of the EG with the dimethyl oxalate under normal pressure is carried out in a temperature range of 110°**C** to 150°**C**. The reaction is carried out until, for example, the methanol is not refluxed any more from the distill-off tube 5. This indicates that the reaction at 150°**C** is finished, and the reactivity of the dimethyl oxalate is about 65%. The reaction time up to this stage is, usually, about 3 to about 6 hours though dependent to some extent upon the amount of the reaction solution 10 that is fed.

While the EG and the dimethyl oxalate are being polymerized under the normal pressure as described above, the other diol component is added to the reaction solution 10 and while the temperature is being elevated, there take place the polymerization of the dimethyl oxalate with the EG and the normal-pressure polymerization of the dimethyl oxlate with the other diol component.

That is, due to the normal-pressure polymerization by adding the diol component thereto, there takes place the esterification polymerization of the homoprepolymer formed by the reaction with the EG and the unreacted dimethyl oxalate. There is thus formed a copolymerized prepolymer into which the copolymerized ester units of the above formulas (1) and (2) are incorporated.

Here, the above-mentioned other diol component may be added to the reaction solution 10 under a condition in which it does not impair the polymerization, specifically a temperature of 120 to 170°**C**, preferably, 130 to 160°**C** or, more preferably, 130 to 150°**C**. That is, the other diol that is added at a temperature higher than a predetermined temperature undergoes the reaction with a prepolymer terminal. Therefore, the molecular weight does not increase through the next step of the reduced-pressure polymerization, and the desired polyoxalate is not obtained. Further, if the other diol is added at a temperature lower than the predetermined temperature, the esters are not exchanged to a sufficient degree between the EG and the dimethyl oxalate. Therefore, the unreacted dimethyl oxalate is distilled off in large amounts in the next step of the reduced-pressure polymerization causing the tubes to be clogged. In this case, either, the polyoxalate copolymer of the desired composition is not obtained.

The reaction is continued until it is confirmed that the methanol or the other diol is no longer distilled off from the distill-off tube 5. The reaction time is usually about 0.5 to about 2 hours after the other diol has been added while maintaining the same temperature. Thereafter, the temperature is elevated up to 180°**C** and the normal-pressure polymerization is completed.

Here, the amount of the other diol component that is added is so set that the polyoxalate copolymer that is finally obtained has a composition that lies in the above-mentioned range (e.g., the constituent unit derived from the EG is 98 to 90 mol% and, specifically, 94 to 90 mol%).

In conducting the normal-pressure polymerization reaction of the EG with the other diol as described above, for example, the EG is reacted with the dimethyl oxalate. Here, after the reaction, the temperature in the vertex portion A of the distill-off tube 5 is adjusted to be at least nearly the boiling point of the methanol. The same measure is also taken in the subsequent reaction thereof with the other diol.

The normal-pressure polymerization is carried out as described above. At a moment when the methanol is distilled off no longer, the reduced-pressure polymerization of the next step is executed.

### 2. Reduced-pressure polymerization;

The normal-pressure polymerization is followed by the reduced-pressure polymerization by maintaining a pressure in the reactor 1 that is reduced down to 0.1 to 1 kPa, and maintaining the reaction solution 10 that contains the prepolymer of the polyoxalate copolymer formed by the normal-pressure polymerization at a temperature of 180 to 200°**C**.

Through the reduced-pressure polymerization, the esterification further continues enabling the other diols (e.g., BD and PD) remaining in the reaction solution 10 to be removed therefrom. There is thus obtained the polyoxalate copolymer of the desired composition having a high molecular weight.

In the reduced-pressure polymerization, if the temperature of the reaction solution is lower than 180°**C**, it is not allowed to achieve a high molecular weight. In this case, for instance, the obtained polyoxalate copolymer tends to be excessively hydrolyzed; i.e., the polyoxalate copolymer undergoes the hydrolysis at one time if it is mixed into water. If the temperature of the reaction solution exceeds 200°**C**, on the other hand, the obtained polyoxalate copolymer undergoes the heat decomposition.

Here, in the invention, if the above-mentioned other diol is added in the step of the reduced-pressure polymerization, then the diol volatilizes remarkably, and it becomes difficult to carry out the polymerization reaction with the diol.

In the step of the reduced-pressure polymerization, further, it is desired that the refluxing portion 5a of the distill-off pipe 5 is maintained at a temperature of about 90 to about 140°**C**. This promotes the removal of the EG and, further, decreases the content of the volatile components.

The step of the reduced-pressure polymerization may be finished when the removal of the EG has terminated. Further, a rise in the viscosity can be confirmed relying upon a value of the electric current flowing into the stirrer. An increase in the time of the reduced-pressure polymerization results in a decrease in the yield. Therefore, the timing for taking out the polyoxalate copolymer may be quickened depending on the value of the electric current.

The polyoxalate copolymer that is formed is taken out from the reactor 1 and, as required, is formed into grains of a predetermined granular size by using a pulverizer or an underwater cutter so as to be put into use in a variety of applications.

In the invention, after the step of the reduced-pressure polymerization has been finished, it is desired that the polyoxalate copolymer that is suitably pulverized is then dried under reduced pressure.

The drying under reduced pressure helps remove the ethylene glycol and the other diols that are contained in small amounts in the polyoxalate copolymer and, therefore, further decrease the amounts of the volatile components.

The thus obtained polyoxalate copolymer of the present invention has a large difference between the 5% weight loss temperature and the melting point. Therefore, the heat decomposition is effectively suppressed at the time of melt kneading and heat forming, and the polyoxalate copolymer can be handled very excellently. Moreover, the polyoxalate copolymer that is produced without using the solvent contains the volatile components in very small amounts, effectively prevents the blocking at the time of mechanical pulverization, and can be pulverized very favorably. The polyoxalate copolymer can be excellently hydrolyzed, too.

The polyoxalate copolymer of the present invention having the above properties can be excellently handled and can, therefore, be easily used in a variety of fields such as agriculture, cleaning the environment, excavating the resources and the like by utilizing its specific properties like hydrolyzing property, etc.

### EXAMPLES

The invention will now be described with reference to the following Experimental Examples.

In the following experiments, measurements were taken relying on the methods described below.

### <Measuring the glass transition temperature and the quantity of heat of fusion (ΔH) >

Apparatus: DSC6220 (differential scanning calorimeter) manufactured by Seiko Instruments Inc.

A curve of a temperature rise of the first time was described by elevating the temperature from -100°**C** at a rate of 20°**C**/min., and an endothermic peak was observed therefrom. Next, the temperature was further elevated therefrom by 20°**C** and the temperature was maintained for 10 minutes. Thereafter, the temperature was lowered down to -100°**C** at a rate of 20°**C** /min. The temperature was elevated again at the same rate as above to describe a curve of temperature rise of the second time, and an endothermic peak was observed therefrom. The sum of the areas of these peaks was regarded to be a quantity of heat of fusion (**Δ**H) .

### <Measuring the molecular weight>

Apparatus: Gel permeation chromatograph GPC
Detector: Differential refractive index detector RI
Column: Shodex HFIP-LG (one unit), HFIP-806M (two units) (Showa Denko K.K.)
Solvent: Hexafluoroisopropanol (5 mM sodium trifluoroacetate was added)
Flow rate: 0.5 mL/min.
Column temperature: 40°**C**

Preparation of samples: Five mL of a solvent was added to about 1.5 mg of a sample, and the mixture thereof was mildly stirred at room temperature (sample concentration of about 0.03%). After having confirmed with the naked eye that the sample had been dissolved, the solvent was filtered using a 0.45 *µ*m filter. All samples were measured within about one hour from the start of preparation. A polystyrene was used as the standard.

### <Melting point, content of volatile components, 5% weight loss temperature (Td5%) >

Apparatus: TG/DTA 7220 manufactured by Hitachi High-Tech Science Co.
Preparation of samples: Amounts of samples, 5 to 10 mg.
Measuring conditions: Nitrogen atmosphere, elevating the temperature at a rate of 10°**C**/min. and measuring over a range of 40°**C** to 300°**C**.
The melting point was found based on the peak top.

The content of the components volatilized was found according to [(initial weight - weight at 200°**C**) /initial weight] x 100.

Td5% was a temperature of when the weight of the sample has decreased by 5% with respect to the initial weight.

### <Measuring the diameters of the spherical particles>

20 Particles were arbitrarily selected out of the group of particles and were each measured for their long diameters and short diameters, and their average values were calculated.

### <Example 1>

Into a 1-L separable flask equipped with a mantle heater, a thermometer for measuring the liquid temperature, a stirrer, a nitrogen introduction tube and a distill-off column, there were introduced:
dimethyl oxalate, 354 g (3 moles),
ethylene glycol, 201 g (3.24 moles), and
dibutyltin oxide, 0.15 g,
and the temperature in the flask was elevated in a nitrogen stream up to 110°**C** to conduct the polymerization under the normal pressure. After the methanol started distilling off, the liquid temperature was maintained the same for one hour to carry out the reaction. After one hour has passed, the temperature was elevated up to 150°**C** at a rate of 10°**C**/30 min. to execute the polymerization under the normal pressure.

At the temperature of 150°**C**, 32.4 g (0.36 moles) of 1,4-butanediol was added thereto, and the reaction was carried out for one hour. Thereafter, the temperature was elevated up to 180°**C** at a rate of 10°**C**/30 min. The liquid was recovered in an amount of 192 g.

Thereafter, the liquid temperature in the flask was set to be 190°**C** and the pressure therein was reduced down to 0.1 kPa to 0.8 kPa, and the polymerization was carried out under the reduced pressure to form a polymer which was then taken out. The distill-off tube 5 was not clogged during the polymerization under the reduced pressure.

The polymer that was taken out was granulated by using a crusher, and was crystallized by being heat-treated in vacuum at 90°**C** for 2 hours and at 120°**C** for 2 hours. The polymer possessed a weight average molecular weight of 50,000.

### <Example 2>

The synthesis was conducted in the same manner as in Example 1 but using 27.4 g (0.36 moles) of a 1,3-propanediol (i.e., 1,3-propylene glycol) instead of using the 1,4-butanediol.

### <Example 3> (reference)

The synthesis was conducted in the same manner as in Example 1 but feeding the ethylene glycol in an amount of 218.7 g (3. 5 moles) and the 1, 4-butanediol in an amount of 6.48 g (0.072 moles) .

### <Example 4>

The synthesis was conducted in the same manner as in Example 1 but feeding the ethylene glycol in an amount of 214.5 g (3.46 moles) and the 1,4-butanediol in an amount of 12.96 g (0.144 moles).

### <Example 5>

The synthesis was conducted in the same manner as in Example 1 but feeding the ethylene glycol in an amount of 210 g (3.38 moles) and the 1,4-butanediol in an amount of 19.4 g (0.216 moles).

### <Example 6>

The synthesis was conducted in the same manner as in Example 1 but feeding the ethylene glycol in an amount of 205.6 g (3.31 moles) and the 1,4-butanediol in an amount of 26 g (0.288 moles) .

### <Comparative Example 1>

The synthesis was conducted in the same manner as in Example 1 but feeding the ethylene glycol in an amount of 223.5 g (3.6 moles) and feeding no 1,4-butanediol.

### <Comparative Example 2>

The synthesis was conducted in the same manner as in Example 1 but adding the 1,4-butanediol at a moment when the temperature has reached 180°**C**. It was confirmed that the molecular weight did not increase during the polymerization under the reduced pressure.

The polymers obtained in Examples 1 to 5 and Comparative Example 1 above were measured for their properties . The results were as shown in Table 1.

| Table 1 | | | | | |
|---|---|---|---|---|---|
| | ΔH (J/g) | Glass transition temperature (°C) | Melting point (°C) | 5% weight loss temperature (°C) | Temperature differential between 5% weight loss temperature and melting point (°C) |
| Example 1 | 36 | 25 | 160 | 234 | 74 |
| Example 2 | - | 25 | 152 | 224 | 72 |
| Example 3 (Reference) | - | 33 | 176 | 227 | 51 |
| Example 4 | 40 | 31 | 172 | 230 | 58 |
| Example 5 | 57 | 30 | 169 | 232 | 63 |
| Comparative Example 1 | 98 | 35 | 180 | 220 | 40 |

### <Reference Example>

The polyoxalates obtained in Comparative Example 1 and Example 6 were thrown into a biaxial extruder, and the molten resins thereof were extruded through a blow-out port of a predetermined diameter, and were pelletized by using the underwater cutter to prepare spherical particles thereof.

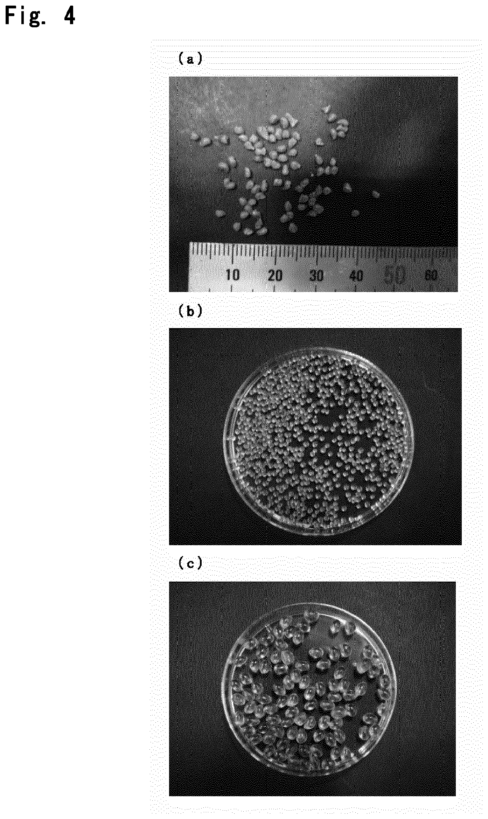

The polyoxalate of Comparative Example 1 possessed poor heat stability, underwent decomposition in the extruder, permitted its melt viscosity to decrease extremely, and did not assume a spherical shape when it was pelletized. Fig. 4(a) is a photograph of the pellets.

The polyoxalate of Example 6 could be pelletized into particles of a spherical shape having an average long diameter of 1.2 mm and a short diameter/long diameter ratio of 0.9. Fig. 4 (b) is a photograph of the spherical pellets. When pelletized under different pelletizing conditions, there were obtained spherical pellets having an average long diameter of 4.8 mm and a short diameter/long diameter ratio of 0.75. Fig. 4(c) is a photograph of the spherical pellets.

### Description of Reference Numerals:

- 1:: polymerization reactor
- 3:: stirrer
- 5:: distill-off tube
- 10:: reaction solution
- 15:: distillate

## Claims

1. A polyoxalate copolymer including an acid-constituting unit derived from an oxalic acid and a diol-constituting unit derived from a diol component, the diol-constituting unit being derived from a combination of an ethylene glycol and other diol, wherein the other diol is a 1,3-propylene glycol or a 1,4-butanediol, and wherein the polyoxalate copolymer has:
- a temperature differential between a 5% weight loss temperature as measured by the TG-DTA and a melting point thereof in a range of 55 to 80°**C**, wherein the 5% weight loss temperature and melting point are as measured on the TG/DTA 7220 apparatus manufactured by Hitachi High-Tech Science Co. when preparing amounts of samples of 5 to 10 mg, when measuring conditions are nitrogen atmosphere, elevating the temperature at a rate of 10°**C**/min. and measuring over a range of 40°**C** to 300°**C**, and wherein the melting point is found based on the peak top and the 5% weight loss temperature is the temperature of when the weight of the sample has decreased by 5% with respect to the initial weight; and
- a quantity of heat of fusion (**Δ**H) is in a range of less than 60 J/g, wherein the heat of fusion (**Δ**H) is the sum of the areas of the following peaks when measured by differential scanning calorimetry on the DSC6220 apparatus manufactured by Seiko Instruments Inc: (i) when describing a curve of a temperature rise of the first time by elevating the temperature from -100°**C** at a rate of 20°**C** /min., observing an endothermic peak therefrom; and (ii) next, further elevating the temperature therefrom by 20°**C**, maintaining the temperature for 10 minutes, thereafter lowering the temperature down to -100°**C** at a rate of 20°**C** /min, then elevating the temperature again at the same rate as above to describe a curve of temperature rise of the second time, and observing an endothermic peak therefrom.

2. The polyoxalate copolymer according to claim 1, wherein 98 to 90 mol% of the diol-constituting unit is derived from the ethylene glycol.

3. The polyoxalate copolymer according to claim 1, wherein the polyoxalate copolymer has a shape of spherical particles satisfying 0.7 < short diameter/long diameter ≦ 1 and having an average value of the long diameters in a range of 0.5 to 10 mm.

4. A method of producing a polyoxalate copolymer by using, as a diol component, an ethylene glycol and other diol in combination, wherein the other diol is a 1,3-propylene glycol or a 1,4-butanediol, and subjecting the diol component and a dimethyl oxalate to an esterification polymerization reaction, wherein:
the esterification polymerization reaction is executed through a step that includes:
a step of a normal-pressure polymerization inclusive of the esterification polymerization reaction of a oxalic acid formed from the dimethyl oxalate and the ethylene glycol, and
a step of a reduced-pressure polymerization that is accompanied by a removal of diol after the step of the normal-pressure polymerization;
and wherein;
the other diol is added to a polymerization system at a predetermined temperature of 120 to 170°**C** in the step of the normal-pressure polymerization.

## Patentansprüche

1. Polyoxalat-Copolymer, einschließlich einer säurebildenden Einheit, die von einer Oxalsäure abgeleitet ist, und einer diolbildenden Einheit, die von einer Diolkomponente abgeleitet ist, wobei die diolbildende Einheit von einer Kombination aus einem Ethylenglykol und anderen Diol abgeleitet ist, wobei das andere Diol ein 1,3-Propylenglykol oder ein 1,4-Butandiol ist und wobei das Polyoxalat-Copolymer Folgendes hat:
- einen Temperaturunterschied zwischen einer 5-%-Gewichtsverlusttemperatur, gemessen durch TG-DTA, und einen Schmelzpunkt davon in einem Bereich von 55 bis 80 °C, wobei die 5-%-Gewichtsverlusttemperatur und der Schmelzpunkt wie auf der TG/DTA-7220-Vorrichtung, hergestellt von Hitachi High-Tech Science Co., gemessen, sind, wenn Mengen von Proben von 5 bis 10 mg hergestellt werden, wenn Messbedingungen Stickstoffatmosphäre sind, Erhöhen der Temperatur mit einer Geschwindigkeit von 10 °C/min und Messen über einen Bereich von 40 °C bis 300 °C, und wobei der Schmelzpunkt basierend auf der Spitze gefunden wird und die 5-%-Gewichtsverlusttemperatur die Temperatur ist, wenn das Gewicht der Probe um 5 % in Bezug auf das Anfangsgewicht abgenommen hat; und
- eine Menge der Schmelzwärme (ΔH) in einem Bereich von weniger als 60 J/g ist, wobei die Schmelzwärme (ΔH) die Summe der Bereiche der folgenden Spitzen ist, wenn durch Differentialscanningkalorimetrie auf der DSC6220-Vorrichtung, hergestellt von Seiko Instruments Inc, gemessen: (i) wenn eine Kurve eines Temperaturanstiegs des ersten Mals durch Erhöhen der Temperatur von -100 °C mit einer Geschwindigkeit von 20 °C/min beschrieben wird, Beobachten eines endothermen Peaks davon; und (ii) anschließend weiteres Erhöhen der Temperatur davon um 20 °C, Aufrechterhalten der Temperatur 10 Minuten lang, danach Senken der Temperatur auf -100 °C mit einer Geschwindigkeit von 20 °C/min, dann Erhöhen der Temperatur erneut mit der gleichen Geschwindigkeit wie oben, um eine Kurve eines Temperaturanstiegs des zweiten Mals zu beschrieben, und Beobachten eines endothermen Peaks davon.

2. Polyoxalat-Copolymer nach Anspruch 1, wobei 98 bis 90 Mol-% der diolbildenden Einheit von dem Ethylenglykol abgeleitet sind.

3. Polyoxalat-Copolymer nach Anspruch 1, wobei das Polyoxalat-Copolymer eine Form von kugelförmigen Teilchen hat, die 0,7 < kurzer Durchmesser/langer Durchmesser ≤ 1 erfüllen und mit einem Durchschnittswert der langen Durchmesser in einem Bereich von 0,5 bis 10 mm.

4. Verfahren des Erzeugens eines Polyoxalat-Copolymers durch Verwenden, als eine Diolkomponente, eines Ethylenglykols und anderen Diols in Kombination, wobei das andere Diol ein 1,3-Propylenglykol oder ein 1,4-Butandiol ist, und Aussetzen der Diolkomponente und eines Dimethyloxalats unter eine Veresterungs-Polymerisationsreaktion, wobei:
die Veresterungs-Polymerisationsreaktion durch einen Schritt ausgeführt wird, der Folgendes beinhaltet:
einen Schritt einer Normaldruckpolymerisation einschließlich der Veresterungs-Polymerisationsreaktion einer Oxalsäure, gebildet aus dem Dimethyloxalat und dem Ethylenglykol, und
einen Schritt einer Polymerisation mit verringertem Druck, die durch ein Entfernen eines Diols nach dem Schritt der Normaldruckpolymerisation begleitet wird;
und wobei;
das andere Diol zu einem Polymerisationssystem bei einer vorbestimmten Temperatur von 120 bis 170 °C in dem Schritt der Normaldruckpolymerisation zugegeben wird.

## Revendications

1. Copolymère polyoxalate incluant une unité constitutive d'acide dérivée d'un acide oxalique et une unité constitutive de diol dérivée d'un composant diol, l'unité constitutive de diol étant dérivée d'une association d'un éthylène-glycol et d'un autre diol, dans lequel l'autre diol est un 1,3-propylène-glycol ou un 1,4-butanediol, et dans lequel le copolymère polyoxalate a :
- un différentiel de température entre une température de perte de poids de 5 % telle que mesurée par TG-DTA et un point de fusion de celui-ci dans une plage de 55 à 80°C, dans lequel la température de perte de poids de 5 % et le point de fusion sont tels que mesurés sur l'appareil de TG/DTA 7220 fabriqué par Hitachi High-Tech Science Co. lors de la préparation de quantités d'échantillons de 5 à 10 mg, lorsque des conditions de mesure sont une atmosphère d'azote, en élevant la température à une vitesse de 10°C/min. et en mesurant sur une plage de 40°C à 300°C, et dans lequel le point de fusion est trouvé sur la base du sommet de crête et la température de perte de poids de 5 % est la température lorsque le poids de l'échantillon a diminué de 5 % par rapport au poids initial ; et
- une quantité de chaleur de fusion (ΔH) est dans une plage inférieure à 60 J/g, dans lequel la chaleur de fusion (ΔH) est la somme des zones des crêtes suivantes lors de la mesure par calorimétrie différentielle à compensation de puissance sur l'appareil DSC6220 fabriqué par Seiko Instruments Inc : (i) lors de la description d'une courbe d'une hausse de température une première fois, en élevant la température à partir de -100°C à une vitesse de 20°C /min., en observant une crête endothermique à partir de celle-ci ; et (ii) ensuite, en élevant davantage la température à partir de celle-ci de 20°C, en maintenant la température pendant 10 minutes, après cela en abaissant la température jusqu'à -100°C à une vitesse de 20°C /min, puis en élevant la température à nouveau à la même vitesse que ci-dessus pour décrire une courbe de hausse de température une seconde fois, et en observant une crête endothermique à partir de celle-ci.

2. Copolymère polyoxalate selon la revendication 1, dans lequel de 98 à 90 % molaire de l'unité constitutive de diol est dérivé de l'éthylène-glycol.

3. Copolymère polyoxalate selon la revendication 1, dans lequel le copolymère polyoxalate a une forme de particules sphériques satisfaisant à 0,7 < court diamètre/long diamètre ≦ 1 et ayant une valeur moyenne des longs diamètres dans une plage de 0,5 à 10 mm.

4. Procédé de production d'un copolymère polyoxalate en utilisant, en tant que composant diol, un éthylène-glycol et un autre diol en association, dans lequel l'autre diol est un 1,3-propylene-glycol ou un 1,4-butanediol, et en soumettant le composant diol et un oxalate de diméthyle à une réaction de polymérisation par estérification, dans lequel :
la réaction de polymérisation par estérification est exécutée par l'intermédiaire d'une étape qui inclut :
une étape d'une polymérisation à pression normale incluant la réaction de polymérisation par estérification d'un acide oxalique formé à partir de l'oxalate de diméthyle et de l'éthylène-glycol, et
une étape d'une polymérisation à pression réduite qui est accompagnée par une élimination de diol après l'étape de la polymérisation à pression normale ;
et dans lequel ;
l'autre diol est ajouté à un système de polymérisation à une température prédéterminée de 120 à 170°C dans l'étape de la polymérisation à pression normale.
